# EUROPÄISCHE PATENTSCHRIFT

(11) **EP 0 774 794 B1**
(45) Veröffentlichungstag und Bekanntmachung des Hinweises auf die Patenterteilung: **17.05.2000**
(21) Anmeldenummer: 96116632.9
(22) Anmeldetag: 17.10.1996
(51) Int. Cl.: H01M 8/02

(54) **Brennstoffzelle mit Polymerelektrolyt und integrierte Dichtung**
Fuel cell with polymeric electrolyte and integrated seal
Pile à combustible à électrolyte polmère comprenant un joint d'etanchéité intégré

(30) Priorität: 15.11.1995 DE 19542475
(43) Veröffentlichungstag der Anmeldung: 21.05.1997
(73) Patentinhaber: BALLARD POWER SYSTEMS INC., Burnaby, British Columbia V5J 5J9 (CA)
(72) Erfinder: Hartmut, Elias, 88709 Meersburg (DE)
(74) Vertreter: Wilhelm & Dauster Patentanwälte European Patent Attorneys

(56) Entgegenhaltungen:
- WO-A-95/03638
- WO-A-95/16287
- WO-A-96/12316
- DE-A- 3 526 614
- DE-A- 19 539 959
- DE-C- 4 442 285
- JP-A- 5 234 606
- US-A- 5 292 600
- PATENT ABSTRACTS OF JAPAN vol. 014, no. 085 (E-0890), 16.Februar 1990 & JP 01 296569 A (HITACHI LTD), 29.November 1989, & CHEMICAL ABSTRACTS, vol. 113, no. 12, 17.September 1990 Columbus, Ohio, US; abstract no. 100895,
- PATENT ABSTRACTS OF JAPAN vol. 016, no. 162 (E-1192), 20.April 1992 & JP 04 012465 A (FUJI ELECTRIC CO LTD), 17.Januar 1992,
- PATENT ABSTRACTS OF JAPAN vol. 96, no. 002 & JP 08 045517 A (TANAKA KIKINZOKU KOGYO KK), 16.Februar 1996,

## Beschreibung

Die Erfindung betrifft eine Polymerelektrolytmembran-Brennstoffzelle mit Verteilerplatten aus einem elastischen, plastisch verformbaren und elektrisch leitfähigen Material gemäß dem Oberbegriff des Hauptanspruchs.

Brennstoffzellen bestehen im einfachsten Fall aus zwei elektrisch leitenden Elektroden, die durch eine ionenleitende Membran voneinander getrennt sind. Zur Zuführung der Reaktionsmedien werden Verteilerplatten mit integrierten Gas- beziehungsweise Flüssigkeitsführungskanälen verwendet. Um ein unkontrolliertes Austreten der Reaktionsmedien zu verhindern werden die einzelnen Gas- beziehungsweise Flüssigkeitsräume bei herkömmlichen Brennstoffzellen durch Dichtungen, die jeweils zwischen den Verteilerplatten und den Elektroden angeordnet sind, gegeneinander abgedichtet.

Bei Brennstoffzellen mit protonenleitender Polymerelektrolytmembran - sogenannten PEM-Brennstoffzellen, werden die Verteilerplatten aus Graphitmaterialien hergestellt, wobei in die porösen, aus Carbonpapier bestehenden Elektroden der Membran-Elektroden-Anordnung Dichtungen aus einem Elastomermaterial eingebracht sind. Für die Verteilerplatten können vorzugsweise elastische, plastisch verformbare und elektrisch leitfähige Materialien, insbesondere Graphitfolien mit einer spezifischen Dichte von 0,2 - 1,8 g/cm³ verwendet werden. Eine solche Anordnung zeigt beispielsweise die US-PS 5,284,718.

Da die Verteilerplatten beziehungsweise die Elastomerdichtungen aus unterschiedlichen Materialien hergestellt sind und daher unterschiedliche thermomechanische Eigenschaften aufweisen kann es im Betrieb der PEM-Brennstoffzelle durch die Erwärmung der Brennstoffzelle aufgrund unterschiedlicher Ausdehnung der Materialien zu Undichtigkeiten kommen. Außerdem ist für die Herstellung, Montage und die exakte Justierung dieser Dichtungen ein erheblicher Aufwand notwendig.

Um dieses Problem zu lösen wurde in der DE 43 14 745 C1 bereits vorgeschlagen, alle wesentlichen Komponenten der PEM-Brennstoffzelle, also auch die Verteilerplatten, aus einem thermoplastischen Grundpolymer herzustellen und durch ein Verbundverfahren ohne zusätzliches Dichtungsmaterial zusammenzufügen. Durch diese Methode kann zwar auf separate Elastomerdichtungen verzichtet werden, die Materialauswahl für den Brennstoffzellenaufbau wird jedoch stark eingeschränkt.

In der nachveröffentlichten Offenlegungsschrift WO 96/12316 ist eine Brennstoffzelle beschrieben, bei der an den Seiten einer jeweiligen Membran-Elektroden-Anordnung Mehrplatten-Verteiler vorgesehen sind. Die Mehrplatten-Verteiler bestehen außenseitig aus einem Anodenabdichtrahmen und einem Kathodenabdichtrahmen, zwischen denen mehrere weitere, fluidströmungsleitende Einzelplatten angeordnet sind. Bei Bedarf kann für eine Abdichtung, die ohne das Einlegen separater Dichtungen auskommt, an der Vorderseite der Anodenabdichtrahmen ein einzelner Abdichtsteg und an der Rückseite der Kathodenabdichtrahmen ein Paar von Abdichtstegen vorgesehen sein, in welche der Abdichtsteg eines jeweils benachbarten Anodenabdichtrahmens eingreifen kann. Die Abdichtstege umgeben Durchströmöffnungen, die in die Abdichtrahmen eingebracht sind, sowie größere offene Bereiche in denselben.

In der Patentschrift DE 35 26 614 C2 ist ein Brennstoffzellenstapel offenbart, bei dem zwischen zwei Elektroden ein mit flüssigem Elektrolyt gefüllter Zwischenraum gebildet ist, während die Elektrodenaußenseiten mit je einem verteilerkanalbildenden Stromkollektor in Kontakt stehen. Die Elektroden sind von Rahmenplatten gehalten, die ebenso wie der Rahmenteil der Stromkollektoren aus einem elektrisch isolierenden Kunststoffmaterial bestehen. Der innere Bereich der Stromkollektoren wird durch eingebrachte Zusatzstoffe elektrisch leitfähig gemacht. Zur Abdichtung kann jede Öffnung in den die Elektroden tragenden Rahmen von zwei Rippen umgeben sein, die mit dem Gießen des Rahmens hergestellt werden und von drei parallelen Nuten umgeben sind, die das überschüssige Material der Rippen beim Zusammenbau der Rahmen aufnehmen können.

Es ist die Aufgabe der Erfindung, eine wirksame und einfach zu fertigende Dichtungsanordnung für Polymerelektrolytmembran-Brennstoffzellen mit Verteilerplatten aus einem elastischen, plastisch verformbaren und elektrisch leitfähigen Material zu schaffen.

Die Aufgabe wird erfindungsgemäß durch die Merkmale des Patentanspruchs 1 gelöst.

Die Integration der Dichtung in die Verteilerplatte als eine aus deren Grundkörper ausgeformte Erhebung bietet verschiedene Vorteile. Zum einen sind die thermomechanischen Eigenschaften des Dichtungsmaterials und der Verteilerplatte identisch und somit hinsichtlich einer Wärmeausdehnung unkritisch. Außerdem kann die Herstellung der Verteilerplatten und die Ausbildung der Dichtung in einem gemeinsamen Herstellprozeß erfolgen, was eine Reduzierung der Herstellkosten zur Folge hat. Schließlich entfällt der Aufwand für die Montage und genaue Justierung der Dichtung.

Im folgenden wird der Aufbau einer erfindungsgemäßen Vorrichtung anhand einer Zeichnung näher erläutert, wobei
- Fig. 1: den prinzipiellen Aufbau einer Einzelzelle einer PEM-Brennstoffzelle,
- Fig. 2: die Verteilerplatte aus Fig. 1 und
- Fig. 3.: schematisch eine Verteilerplatte mit integrierter Dichtung im Schnitt zeigt.

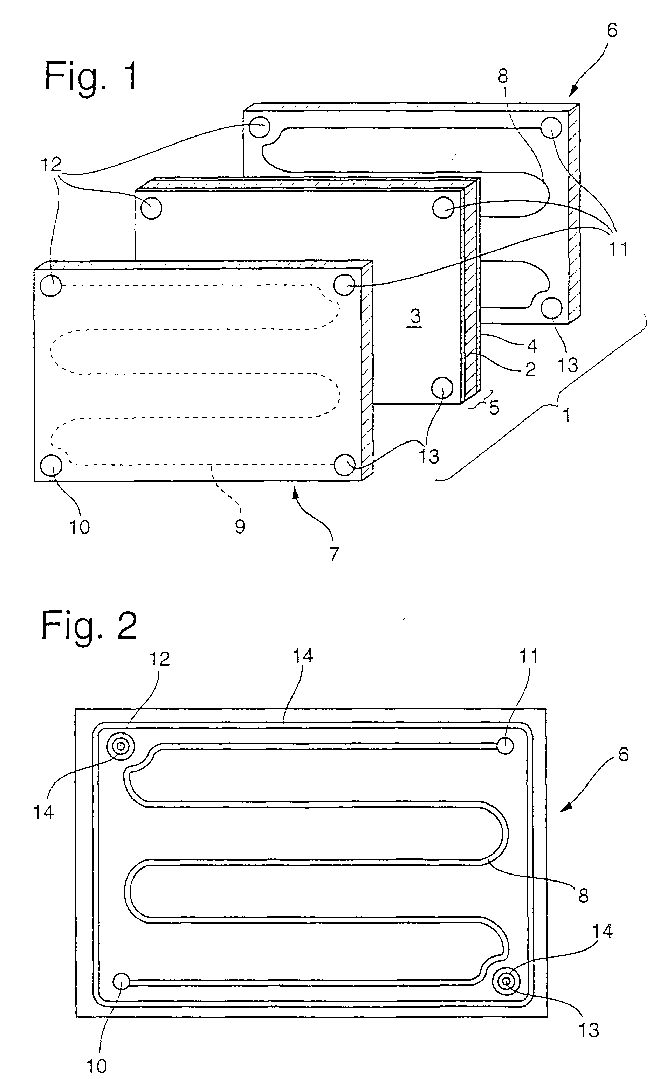

In Fig. 1 ist eine insgesamt mit 1 bezeichnete Einzelzelle einer nicht näher dargestellten Brennstoffzelle gezeigt. Es handelt sich hierbei um eine Brennstoffzelle mit einer Polymerelektrolytmembran 2, im folgenden kurz als PEM-Brennstoffzelle bezeichnet. Die genaue Funktionsweise einer PEM-Brennstoffzelle ist beispielsweise aus dem angegebenen Stand der Technik bekannt und wird daher im folgenden nur noch kurz beschrieben. In solchen PEM-Brennstoffzellen wird aus Wasserstoff und Sauerstoff elektrischer Strom erzeugt. Hierbei werden die Reaktionspartner nicht in direkten Kontakt gebracht, sondern werden an der Polymerelektrolytmembran 2 in einem kontrollierten elektrochemischen Prozeß umgesetzt. Als Reaktionsprodukt entsteht Wasser.

Die Polymerelektrolytmembran 2 ist zur Abnahme des elektrischen Stromes auf gegenüberliegenden Oberflächen jeweils mit einer leitfähigen Elektrodenschicht 3, 4 versehen. Zur Verbesserung der Reaktion kann zusätzlich eine Katalysatorschicht, vorzugsweise aus einem Platinmaterial, auf die Elektroden 3, 4 aufgebracht werden. Die Anordnung aus Polymerelektrolytmembran 2, Elektroden 3, 4 und Katalysatorschicht bilden insgesamt die sogenannte Membran-Elektroden-Anordnung 5. Zur Zufuhr der Reaktionsmedien zur Membran-Elektroden-Anordnung 5 werden Verteilerplatten 6, 7 vorgesehen. Auf den der Membran-Elektroden-Anordnung 5 zugewandten Oberflächen der Verteilerplatten 6, 7 sind Kanäle 8, 9 ausgebildet, wobei die der Kathode 3 zugeordneten Kanäle 9 zur Zufuhr von Sauerstoff beziehungsweise Luft und die der Anode 4 zugeordneten Kanäle 8 zur Zufuhr von Wasserstoff oder eines anderen Brenngases dienen.

Insbesondere bei aus vielen Einzelzellen 1 zusammengesetzten Brennstoffzellenstapeln werden zur Zufuhr der Reaktionsmedien zu den einzelnen Verteilerplatten 6, 7 und der Membran-Elektroden-Anordnung 5 Öffnungen 10-13 vorgesehen, wobei die Öffnungen 10, 11 zur Zu- beziehungsweise Abfuhr von Wasserstoff oder eines anderen Brenngases und die Öffnungen 12, 13 zur Zu- beziehungsweise Abfuhr von Sauerstoff beziehungsweise Luft dienen. Bei Brennstoffzellenstapeln können außerdem Kühlkanäle in den Verteilerplatten 6, 7 oder in separaten Kühlplatten vorgesehen werden. Diese sind jedoch zur Vereinfachung der Darstellung nicht eingezeichnet. Vorzugsweise werden hierbei sogenannte bipolare Verteilerplatten verwendet. Diese bipolaren Verteilerplatten weisen auf der einen Oberfläche Kanäle 9 für den Sauerstoff beziehungsweise Luft und auf der gegenüberliegenden Oberfläche Kanäle 8 für den Wasserstoff oder ein anderes Brenngas auf. Die Kühlkanäle sind im Kern dieser bipolaren Platten integriert.

Der Aufbau der Verteilerplatten wird nun anhand von Fig. 2, in der die Verteilerplatte 6 aus Fig. 1 nochmals vollständig gezeigt ist, näher beschrieben. Für die Wasserstoffversorgung der Membran-Elektroden-Anordnung 5 ist der Kanal 8 mit den Öffnungen 10 und 11 verbunden. Und zwar wird der Wasserstoff oder ein anderes Brenngas über die Öffnung 10 zugeführt, anschließend mit Hilfe des Kanals 8 über die gesamte Oberfläche der Membran-Elektroden-Anordnung 5 verteilt und schließlich über die Öffnung 11 wieder abgeführt. Bei einem Brennstoffzellenstapel werden die Öffnungen 10-13 seriell durchströmt, wobei jeweils Teilströme aus den Zuführungen 10, 12 entnommen und entsprechend in die Abführung 11, 13 wieder abgegeben werden. Um ein Austreten des Wasserstoffs beziehungsweise des Brenngases zu verhindern, ist entlang des äußeren Randes der Verteilerplatte 6 eine Dichtung 14 vorgesehen. Diese Dichtung 14 schließt beim Zusammenbau der Brennstoffzelle gasdicht mit der Membran-Elektroden-Anordnung 5 ab, so daß zwischen Membran-Elektroden-Anordnung 5 und Verteilerplatte 6 ein Wasserstoffraum ausbildet wird, der sich über die gesamte Membranoberfläche erstreckt. Um zu verhindern, daß zusätzlich Sauerstoff beziehungsweise Luft aus den Öffnungen 12, 13 in den Wasserstoffraum gelangen kann, sind zusätzlich auch entlang dieser Öffnungen 12, 13 kreisförmige Dichtungen 14 vorgesehen.

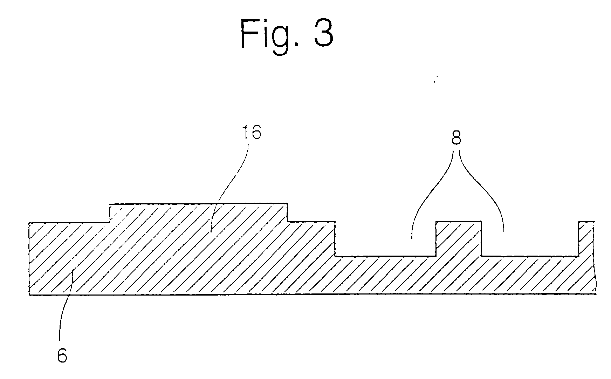

Die genaue Ausbildung dieser Dichtungen 14 wird im folgenden anhand der Fig. 3, die einen Schnitt durch die Verteilerplatte 6 gemäß Fig. 2 zeigt, näher beschrieben. Bei herkömmlichen Anordnungen wird für die Dichtung 14 eine entsprechende Ausnehmung in der Elektrode der Membran-Elektroden-Anordnung 5 vorgesehen. In diese Ausnehmung wird dann anschließend eine vorzugsweise aus einem Elastomermaterial gefertigte Dichtungsfolie eingelegt oder entsprechende Dichtungsmasse in anderer Form eingebracht. Diese Dichtung 14 liegt dann nach der Montage gasdicht an der zugehörigen Verteilerplatte 6 an.

Diese Art von Dichtungsanordnung weist jedoch einige Nachteile auf. Zum einen können sich die Dichtung 14 und die Elektrode aufgrund von unterschiedlichen thermomechanischen Eigenschaften bei einer Temperaturveränderung unterschiedlich stark ausdehnen, so daß es im Betrieb der Brennstoffzelle zu Undichtigkeiten kommen kann. Außerdem ist bei der Montage der Brennstoffzelle ein zusätzlicher Montageschritt notwendig, da entweder die Dichtungsmasse in die Vertiefung eingebracht oder aber die vorgefertigte Dichtungsfolie in die Vertiefung eingelegt werden muß. Im zweiten Fall muß die Dichtungsfolie sogar in einem separaten Herstellprozeß vorgefertigt werden. Außerdem muß bei der Montage auf eine exakte Ausrichtung der Dichtung 14 in Bezug auf die Elektrode geachtet werden.

Um all diese Nachteile zu umgehen wird nun eine Anordnung, wie sie in Fig. 3 gezeigt ist, vorgeschlagen. Hierbei wird anstelle einer separaten Dichtung 14 eine in die Verteilerplatte 6 integrierte Erhebung 16 als Dichtung verwendet. Wie in Versuchen bereits ermittelt wurde, ist auch mit einer solchen Anordnung ein flüssigkeits- beziehungsweise gasdichter Abschluß zwischen der Oberfläche der Erhebung 16 und der Membran-Elektroden-Anordnung 5 unter den in einer PEM-Brennstoffzelle herrschenden Bedingungen möglich. Bei der Herstellung der Verteilerplatten 6 muß zu diesem Zweck lediglich an den gewünschten Stellen anstelle einer Dichtung 14 eine in die Verteilerplatte integrierte Erhebung 16 angeordnet werden.

Da solche Verteilerplatten 6, die vorzugsweise aus einem elastischen und zugleich plastisch verformbaren Graphitmaterial bestehen und aus einem Ausgangsmaterial mit geringer spezifischer Dichte durch Verdichtungs- und Strukturierungsprozesse hergestellt werden, muß hierbei lediglich am Prägewerkzeug zusätzlich zu den Stegen, die für die Ausformung der Kanäle 8 benötigt werden, entsprechende Nuten mit geeigneter Form zur Ausbildung der Erhebungen 16 vorgesehen werden. Das heißt, anstelle des bisherigen Herstell- und Montagevorgangs muß lediglich das Prägewerkzeug modifiziert werden. Hierzu werden am Prägewerkzeug die gewünschten Erhebungen und Kanalstrukturen in inverser Anordnung ausgebildet. Obwohl im Ausführungsbeispiel eine rechteckförmige Erhebung 16 dargestellt ist können selbstverständlich auch andere Formen für die Erhebung 16 gewählt werden. Auch die Lage der Erhebungen 16 auf der Verteilerplatte 6 in Fig. 2 stellt lediglich ein prinzipielles Ausführungsbeispiel dar. Die Erfindung soll daher nicht auf das gezeigte Ausführungsform beschränkt werden.

Da bei der erfinungsgemäßen Anordnung die Verteilerplatte 6 und die Dichtung 14 aus dem selben Material gefertigt sind und somit identische thermomechanische Eigenschaften aufweisen kann es bei einer Temperaturänderung des System zu keinen Schwierigkeiten durch unterschiedliches Ausdehnungsverhalten kommen. Weitere Vorteile weist diese Anordnung bezüglich der Herstellung auf. Da die Erhebungen 16 direkt beim Prägevorgang der Verteilerplatte 6 ausgeformt werden kann entfällt sowohl ein zusätzlicher Herstell- als auch ein nachträglicher Montagevorgang.

Obwohl die Anordnung der Erhebungen 16 lediglich anhand der Verteilerplatte 6 für den Wasserstoff beziehungsweise des Brenngases beschrieben wurde können solche erfindungsgemäßen Dichtungsanordnungen auf entsprechende Weise für die Verteilerplatte 7 für den Sauerstoff beziehungsweise die Luft und/oder auf andere Komponenten, beispielsweise separate Kühlplatten, in einem Brennstoffzellenstapel angewendet werden. Allgemein ausgedrückt können durch die in die Folien aus einem elastischen, plastisch verformbaren und elektrisch leitfähigen Material integrierten Erhebungen 16 beliebige Flüssigkeitsbeziehungsweise Gasräume zwischen dieser Folie und benachbarten Platten oder Folien abgedichtet werden. Insbesondere ist es möglich, die Flüssigkeits- beziehungsweise Gasräume in den Verteilerplatten 6, 7 gegen andere Graphitoberflächen abzudichten. Kennzeichnend für das für die Verteilerplatten 6,7 verwendete Material ist die Eigenschaft, elektrisch leitfähig und plastisch verformbar zu sein und trotzdem elastische Eigenschaften zu behalten. Ein Ausführungsbeispiel für ein solches Material sind Graphitfolien mit einer Dichte von 0,2 - 1,8 g/cm³. Die erfindungsgemäße Dichtungsanordnung kann selbstverständlich auch mit der herkömmlichen Dichtungstechnik kombiniert werden, so daß Elastomerdichtungen und integrierte Erhebungen ergänzend eingesetzt werden.

Sollte die Elastizität der Verteilplatte nicht ausreichen, um beim Zusammenfügen der Brennstoffzelle eine ausreichende Abdichtung zwischen der Verteilerplatte 6 und der Membran-Elektroden-Anordnung 5 zu gewährleisten, können zusätzlich auf der Membran-Elektroden-Anordnung 5 zu den Erhebungen 16 korrespondierende und mit einer Elastomerdichtung versehene Vertiefungen vorgesehen werden.

## Patentansprüche

1. Polymerelektrolytmembran-Brennstoffzelle mit mindestens einer Membran-Elektroden-Anordnung, die aus einer auf gegenüberliegenden Seiten mit einer leitenden Elektrodenschicht versehenen Polymerelektrolytmembran besteht, und mit Verteilerplatten aus einem elastischen, plastisch verformbaren und elektrisch leitfähigen Material, die integrierte Kanäle zur Zu- beziehungsweise Abfuhr von Reaktions- und/oder Kühlmedien aufweisen, wobei zur Abdichtung der einzelnen Gas- beziehungsweise Flüssigkeitsräume eine Dichtung zwischen den Verteilerplatten und der Membran-Elektroden-Anordnung vorgesehen ist,
**dadurch gekennzeichnet,**
daß die Dichtung (14) durch eine in die Verteilerplatte (6, 7) integrierte, aus deren Grundkörper ausgeformte Erhebung (16) ausgebildet ist.

2. Vorrichtung nach Anspruch 1,
**dadurch gekennzeichnet,**
daß die Verteilerplatte (6, 7) als Graphitfolie mit einer Dichte von 0,2 - 1,8 g/cm³ ausgebildet ist.

3. Vorrichtung nach Anspruch 1,
**dadurch gekennzeichnet,**
daß die Verteilerplatte (6, 7) mit Hilfe von Erhebungen (16) zusätzlich auch gegen andere Bestandteile der Polymerelektrolytmembran-Brennstoffzelle abgedichtet ist.

4. Vorrichtung nach Anspruch 1,
**dadurch gekennzeichnet,**
daß zusätzlich auf der der Verteilerplatte (6, 7) gegenüberliegenden Platte zu den Erhebungen 16 korrespondierende und mit einer Elastomerdichtungen versehene Vertiefungen vorgesehen sind.

5. Verfahren zur Herstellung einer Verteilerplatte für eine Polymerelektrolytmembran-Brennstoffzelle gemäß Anspruch 1,
**dadurch gekennzeichnet,**
daß die Verteilerplatte (6, 7) durch Prägen aus einem elastischen, plastisch verformbaren und elektrisch leitfähigen Material hergestellt wird, wobei das Prägewerkzeug Stege zur Ausbildung der Gas- beziehungsweise Flüssigkeitskanäle (8) und Vertiefungen zur Ausbildung der Erhebungen (16) aufweist.

## Claims

1. Polymer electrolyte membrane fuel cell having at least one membrane-electrode arrangement which comprises a polymer electrolyte membrane provided with a conductive electrode layer on opposite sides, and having distributor plates of resilient, plastically deformable and electrically conductive material which have integrated channels for the supply and removal of reaction and/or cooling media, a seal being provided between the distributor plates and the membrane-electrode arrangement in order to seal off the individual gas or liquid chambers, characterised in that the seal (14) is formed by a raised portion (16) which is integrated in the distributor plate (6, 7) and which is formed out of the base body thereof.

2. Device according to claim 1, characterised in that the distributor plate (6, 7) is in the form of a graphite foil having a density of from 0.2 to 1.8 g/cm³.

3. Device according to claim 1, characterised in that the distributor plate (6, 7) is additionally, sealed off from other constituents of the polymer electrolyte membrane fuel cell by means of raised portions (16).

4. Device according to claim 1, characterised in that depressions which correspond to the raised portions (16) and which are provided with an elastomeric seal are additionally provided on the plate arranged opposite the distributor plate (6, 7).

5. Method of manufacturing a distributor plate for a polymer electrolyte membrane fuel cell according to claim 1, characterised in that the distributor plate (6, 7) is manufactured by stamping from a resilient, plastically deformable and electrically conductive material, the stamping tool having fillets for forming the gas or liquid channels (8) and depressions for forming the raised portions (16).

## Revendications

1. Pile à combustible à membrane d'électrolyte polymère ayant au moins une configuration membrane-électrodes, qui est constituée d'une membrane d'électrolyte polymère munie d'une couche d'électrode conductrice sur deux faces opposées, et avec des plaques distributrices constituées d'un matériau élastique, plastiquement déformable et conducteur d'électricité, qui comporte des canaux intégrés pour introduire ou évacuer des milieux réactionnels et/ou réfrigérants, un joint d'étanchéité étant prévu entre les plaques distributrices et la configuration membrane-électrodes afin de rendre étanches les différentes chambres de gaz ou de liquide, caractérisée en ce que le joint d'étanchéité (14) est formé par une élévation intégrée dans la plaque distributrice (6,7), façonnée à partir de son corps de base.

2. Dispositif selon la revendication 1, caractérisé en ce que la plaque distributrice (6,7) est formée en tant que feuille de graphite ayant une masse volumique de 0,2 à 1,8 g/cm³.

3. Dispositif selon la revendication 1, caractérisé en ce que la plaque distributrice (6,7) est également rendu étanche à l'aide d'élévations (16) envers d'autres composants de la pile à combustible à membrane d'électrolyte polymère.

4. Dispositif selon la revendication 1, caractérisé en ce que des creux sont également prévus sur la plaque opposée à la plaque distributrice (6,7), correspondant aux élévations (16) et munis de joints d'étanchéité élastomères.

5. Procédé de fabrication d'une plaque distributrice destinée à une pile à combustible à membrane d'électrolyte polymère selon la revendication 1, caractérisé en ce que la plaque distributrice(6,7) est fabriquée par estampage d'un matériau élastique, plastiquement déformable et conducteur d'électricité, l'outil d'estampage comportant des nervures pour former les canaux (8) de liquide ou de gaz et des creux pour former les élévations (16).
